# EUROPEAN PATENT SPECIFICATION

(11) **EP 3 578 519 B1**
(45) Date of publication and mention of the grant of the patent: **12.03.2025**
(21) Application number: 18771378.9
(22) Date of filing: 20.03.2018
(51) Int. Cl.: C02F 1/461, C25B 9/00, C25B 15/02, C25B 15/08

(54) **ELECTROLYZED WATER GENERATING DEVICE**
VORRICHTUNG ZUR ERZEUGUNG VON ELEKTROLYSIERTEM WASSER
DISPOSITIF DE GÉNÉRATION D'EAU ÉLECTROLYSÉE

(30) Priority: 22.03.2017 JP 2017055892
(43) Date of publication of application: 11.12.2019
(73) Proprietor: Nihon Trim Co., Ltd., Osaka 531-0076 (JP)
(72) Inventor: AMENOMORI, Daiji, Nankoku-shi Kochi 783-0060 (JP)
(74) Representative: Manitz Finsterwald Patent- und Rechtsanwaltspartnerschaft mbB
(86) International application number: PCT/JP2018/010917
(87) International publication number: WO 2018/174034

(56) References cited:
- EP-A1- 0 636 581
- EP-A1- 3 248 947
- WO-A1-2016/140102
- JP-A- 2005 319 427
- JP-A- 2009 050 774
- JP-A- 2015 112 570
- JP-A- 2016 165 668
- JP-A- H0 647 378
- JP-A- H11 128 938

## Description

### Technical Field

The present invention relates to an electrolytic water production device that produces electrolytic water containing hydrogen storage metal colloid.

### Background Art

Conventionally, various researches and developments have been made on electrolytic water containing a colloidal hydrogen storage metal. Patent Literature 1 has proposed a technique of adding colloid to an aqueous electrolyte solution before electrolysis, for example.

### Citation List

### Patent Literature

Patent Literature 1: Japanese Patent No. 3569270

An electrolytic water production device according to the preamble of claim 1 is known from EP 0 636 581 A1.

However, since the above-mentioned technique involves the step of adding colloid to the aqueous electrolyte solution, the configuration of the electrolytic water production device may become complicated, and the handling of the device may become complicated, therefore, there is still room for improvement.

The document WO2016140102 A1 discloses a device for electrolysing water known from the prior art.

### Summary of the Invention

### Problems to be Solved by the Invention

The present invention was made in view of the above, and a primary object thereof is to provide an electrolytic water production device capable of easily producing electrolytic water containing a large amount of hydrogen storage metal colloid with a simple configuration.

### Means for Solving the Problem

The object is solved by an electrolytic water production device having the features of claim 1. sub-claims are directed to preferred embodiments of the invention.

In a not claimed aspect of the invention, a method of producing electrolytic water by applying a voltage between a first power feeder and a second power feeder arranged to face each other in water includes a polarity switching step of switching polarity of the first power feeder and the second power feeder each time electrolysis is started.

### Advantageous Effects of the Invention

In the electrolytic water production device according to the present invention, since the surfaces of the first power feeder and the second power feeder are formed of the hydrogen storage metal, the hydrogen storage metal is ionized during electrolysis in the pole chamber arranged on the anode side. A part of hydrogen storage metal ions produced at this time remain in the pole chamber even after the end of the electrolysis. Then, when the next electrolysis is started, the polarity switching unit switches the polarity. Along with this, the power feeder which functioned as an anode to ionize the hydrogen storage metal functions as a cathode to supply electrons to the ions of the hydrogen storage metal. Thereby, the colloidal hydrogen storage metal precipitates in the pole chamber, therefore, electrolytic water containing a large amount of the hydrogen storage metal colloid is produced.

In a method of producing electrolytic water not according to the present invention, by applying a voltage between the first power feeder and the second power feeder arranged to face each other in water, the hydrogen storage metal is ionized on the surface of the power feeder arranged on the anode side. A part of the hydrogen storage metal ions produced at this time adhere to the surface of the power feeder even after the end of the electrolysis. Then, when the next electrolysis is started, the polarity switching step is performed and the polarity of the first power feeder and the second power feeder is switched. Along with this, the power feeder to which the ions of the hydrogen storage metal are adhered functions as a cathode and supplies electrons to the ions of the hydrogen storage metal. Thereby, the colloidal hydrogen storage metal precipitates on the surface of the power feeder, therefore, electrolytic water containing a large amount of the hydrogen storage metal colloid is produced.

### Brief Description of the Drawings

[Fig. 1] A diagram showing a flow path configuration of the electrolytic water production device according to the present invention.
[Fig. 2] A block diagram showing an electrical configuration of the electrolytic water production device of Fig. 1.
[Fig. 3] A flowchart showing a possible implementation of a process procedure of a control unit of Fig. 2.
[Fig. 4] A diagram showing the flow path configuration of a modification of the electrolytic water production device of Fig.1.

### Description of the Preferred Embodiment

The present invention will now be described below in conjunction with accompanying drawings.

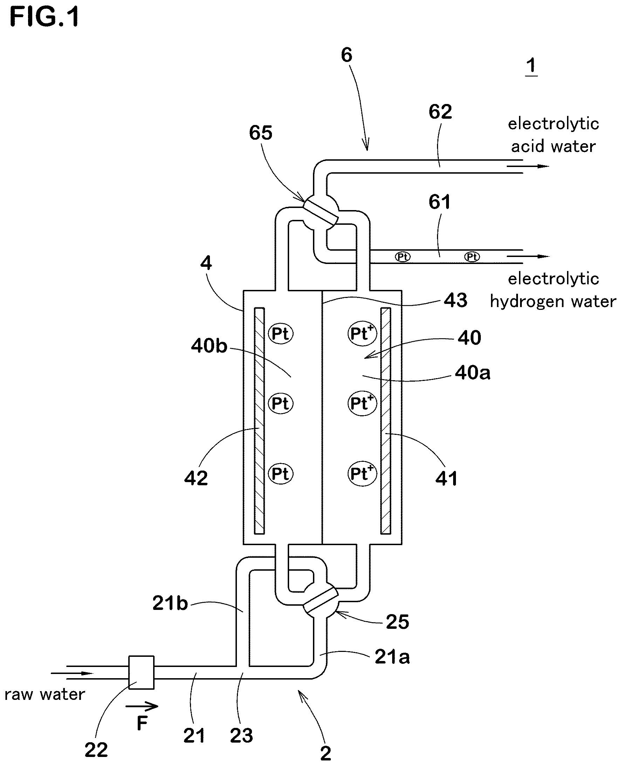

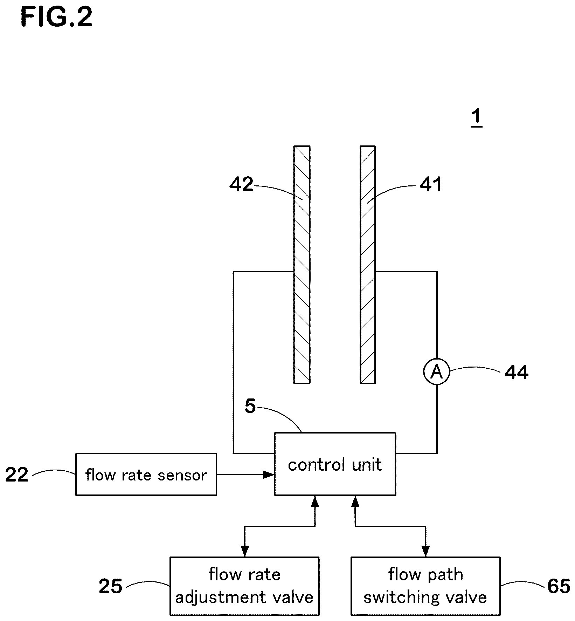

Fig. 1 shows a schematic configuration of an electrolytic water production device 1 according to the present invention. Fig. 2 shows an electrical configuration of the electrolytic water production device 1. The electrolytic water production device 1 is provided with an electrolytic chamber 40 to which water to be electrolyzed is supplied, a first power feeder 41 and a second power feeder 42 having different polarities, a membrane 43 dividing the electrolytic chamber 40, and a control unit 5 for controlling each part of the electrolytic water production device 1.

The electrolytic chamber 40 is formed inside an electrolytic cell 4. Raw water before electrolysis is supplied to the electrolytic chamber 40. Generally, tap water is used as the raw water, but in addition, well water, groundwater, etc. can be used, for example. A water purification cartridge for purifying water supplied to the electrolytic chamber 40 may be provided on the upstream side of the electrolytic chamber 40.

The first power feeder 41 and the second power feeder 42 are arranged to face each other in the electrolytic chamber 40. surfaces of the first power feeder 41 and the second power feeder 42 are formed of the hydrogen storage metal. The hydrogen storage metal is platinum, palladium, vanadium, magnesium, zirconium, and alloys containing these as components.

Preferably a platinum plating layer is formed on the surfaces of the first power feeder 41 and the second power feeder 42.

The membrane 43 is disposed between the first power feeder 41 and the second power feeder 42. The membrane 43 divides the electrolytic chamber 40 into a first pole chamber (40a) positioned on a side of the first power feeder 41 and a second pole chamber (40b) positioned on a side of the second power feeder 42. The membrane 43 is made of a polytetrafluoroethylene (PTFE) hydrophilic film, for example. when a DC voltage is applied between the first power feeder 41 and the second power feeder 42, the water is electrolyzed in the electrolytic chamber 40 to obtain electrolytic water.

In the state shown in Fig. 1, the first power feeder 41 is positively charged, and the first pole chamber (40a) functions as an anode chamber. On the other hand, the second power feeder 42 is negatively charged, and the second pole chamber (40b) functions as a cathode chamber. Thereby, in the second pole chamber (40b), reductive electrolytic hydrogen water in which the generated hydrogen gas is dissolved is produced, and in the first pole chamber (40a), the electrolytic acid water in which the generated oxygen gas is dissolved is produced.

As shown in Fig. 2, the first power feeder 41 and the second power feeder 42 and the control unit 5 are connected via a current supply line. A current detection unit 44 is provided in the current supply line between the first power feeder 41 and the control unit 5. The current detection unit 44 is provided in the current supply line between the second power feeder 42 and the control unit 5. The current detection unit 44 detects a direct current (electrolytic current) supplied to the first power feeder 41 and the second power feeder 42, and outputs an electrical signal corresponding to the detected value to the control unit 5.

The control unit 5 includes a central processing unit (CPU) that executes various types of arithmetic processing, information processing, and the like, a program that controls the operation of the CPU and a memory that stores various information. various functions of the control unit 5 are realized by the CPU, the memory, and the program.

The control unit 5 controls a DC voltage (electrolytic voltage) applied to the first power feeder 41 and the second power feeder 42 based on the electrical signal output from the current detection unit 44, for example. More specifically, the control unit 5 performs feedback control of the voltage applied to the first power feeder 41 and the second power feeder 42 so that the electrolytic current detected by the current detection unit 44 becomes a desired value according to the dissolved hydrogen concentration inputted by the user and the like. For example, when the electrolytic current is too high, the control unit 5 decreases the voltage, and when the electrolytic current is too low, the control unit 5 increases the voltage. Thereby, the electrolytic current supplied to the first power feeder 41 and the second power feeder 42 is appropriately controlled, therefore, hydrogen water having a desired dissolved hydrogen concentration is produced in the electrolytic chamber 40.

The polarity of the first power feeder 41 and the second power feeder 42 is controlled by the control unit 5. That is, the control unit 5 functions as a polarity switching unit for switching the polarity of the first power feeder 41 and the second power feeder 42. By appropriately switching the polarity of the first power feeder 41 and the second power feeder 42, the control unit 5 equalizes the opportunity for the first power feeder 41 and the second power feeder 42 to function as the anode chamber or the cathode chamber. Thereby, adhesion of scales to the first power feeder 41 and the second power feeder 42 and the like is suppressed. Hereinafter, in this specification, unless otherwise specified, the case where the first power feeder 41 functions as the anode feeder and the second power feeder 42 functions as the cathode feeder will be described.

As shown in Fig. 1, the electrolytic water production device 1 further includes a water inlet portion 2 provided on the upstream side of the electrolytic cell 4 and a water outlet portion 6 provided on the downstream side of the electrolytic cell 4.

The water inlet portion 2 has a water supply pipe 21, a flow rate sensor 22, a branch portion 23, a flow rate adjustment valve 25, and the like. The water supply pipe 21 supplies water to be electrolyzed to the electrolytic chamber 40. The flow rate sensor 22 is provided in the water supply pipe 21. The flow rate sensor 22 periodically detects the flow rate (F) per unit time (hereinafter, may be simply referred to as "flow rate") of water supplied to the electrolytic chamber 40, and outputs a signal corresponding to the detected value to the control unit 5.

The branch portion 23 branches the water supply pipe 21 to two directions of water supply pipes (21a) and (21b). The flow rate adjustment valve 25 connects the water supply pipes 21a and 21b with the first pole chamber (40a) or the second pole chamber (40b). The flow rate of water supplied to the first pole chamber (40a) and the second pole chamber (40b) is adjusted by the flow rate adjustment valve 25 under the control of the control unit 5. In this embodiment, since the flow rate sensor 22 is provided on the upstream side of the branch portion 23, the sum of the flow rate of the water supplied to the first pole chamber (40a) and the flow rate of the water supplied to the second pole chamber (40b), that is, the flow rate (F) of the water supplied to the electrolytic chamber 40 is detected.

The water outlet portion 6 has a first water outlet pipe 61, a second water outlet pipe 62, and a flow path switching valve 65.

In Fig. 1, the first water outlet pipe 61 functions as a cathode water pipe for taking out the electrolytic water produced in the pole chamber on the cathode side of the first pole chamber (40a) and the second pole chamber (40b) (that is, the electrolytic hydrogen water). On the other hand, the second water outlet pipe 62 functions as an anode water pipe for taking out the electrolytic water produced in the pole chamber on the anode side of the first pole chamber (40a) and the second pole chamber (40b).

The flow path switching valve 65 is provided downstream of the electrolytic cell 4. The flow path switching valve 65 functions as a flow path switching unit for switching the connection of the first pole chamber (40a) and the second pole chamber (40b) with the first water outlet pipe 61 and the second water outlet pipe 62.

The control unit 5 synchronizes the switching of the polarity of the first power feeder 41 and the second power feeder 42 with the switching of the flow path by the flow path switching valve 65 so that the electrolytic water selected by the user (for example, In Fig. 1, the electrolytic hydrogen water) can always be discharged from the same one of the water pipes (in Fig. 1, the first water outlet pipe 61).

In switching the polarity of the first power feeder 41 and the second power feeder 42, the control unit 5 operates the flow rate adjustment valve 25 and the flow path switching valve 65 in conjunction with each other. Thereby, before and after the switching of the polarity, the water supply to the pole chamber connected to the first water outlet pipe 61 is sufficiently secured, while the water supply to the pole chamber connected to the second water outlet pipe 62 is suppressed, therefore, it is possible to make effective use of water.

It is preferred that the flow rate adjustment valve 25 and the flow path switching valve 65 are integrally formed and driven by a single motor in conjunction with each other as described in Japanese Patent Publication No. 5809208, for example. That is, the flow rate adjustment valve 25 and the flow path switching valve 65 are constituted by a cylindrical outer cylinder, a cylindrical inner cylinder, and the like. Inside and outside of the inner cylinder, flow paths forming the flow rate adjustment valve 25 and the flow path switching valve 65 are provided, and each flow path is configured so as to cross as appropriate according to the operating state of the flow rate adjustment valve 25 and the flow path switching valve 65. The valve device configured as such is referred to as a "double automatic change cross line valve", and contributes to simplifying the configuration and control of the electrolytic water production device 1, therefore, the commercial value of the electrolytic water production device 1 is further increased.

The control unit 5 controls the polarity of the first power feeder 41 and the second power feeder 42 in a plurality of "operation modes". The above operation modes include a "colloidal water mode" suitable for producing electrolytic water containing a large amount of hydrogen storage metal colloid, for example.

In the colloidal water mode, the control unit 5 switches the polarity each time the electrolytic chamber 40 starts electrolysis. That is, in performing the electrolysis in the electrolytic chamber 40, the polarity of the first power feeder 41 and the second power feeder 42 are switched each time. In the operation mode other than the colloidal water mode, the polarity of the first power feeder 41 and the second power feeder 42 are switched every predetermined number of times of electrolysis is started, that is, after the electrolysis is performed a plurality of times.

As already described above, since the surfaces of the first power feeder 41 and the second power feeder 42 are formed of the hydrogen storage metal, the hydrogen storage metal is ionized during electrolysis in the pole chamber arranged on the anode side (in Fig. 1, the first pole chamber (40a), for example). A part of the hydrogen storage metal ions (in this embodiment, platinum ions) produced at this time remain in the first pole chamber (40a) even after the end of the electrolysis and adhere to the surface of the power feeder.

Then, when the next electrolysis is started in the colloidal water mode, the control unit 5 switches the polarity of the first power feeder 41 and the second power feeder 42, therefore, the first power feeder 41 arranged in the first pole chamber (40a) where the ions of the hydrogen storage metal exist functions as the cathode and attracts the ions of the hydrogen storage metal to supply electrons. Along with this, the colloidal hydrogen storage metal precipitates in the first pole chamber (40a), therefore, electrolytic water containing a large amount of minute hydrogen storage metal colloid (platinum nano-colloid in this embodiment) having a diameter of nanometer level is produced.

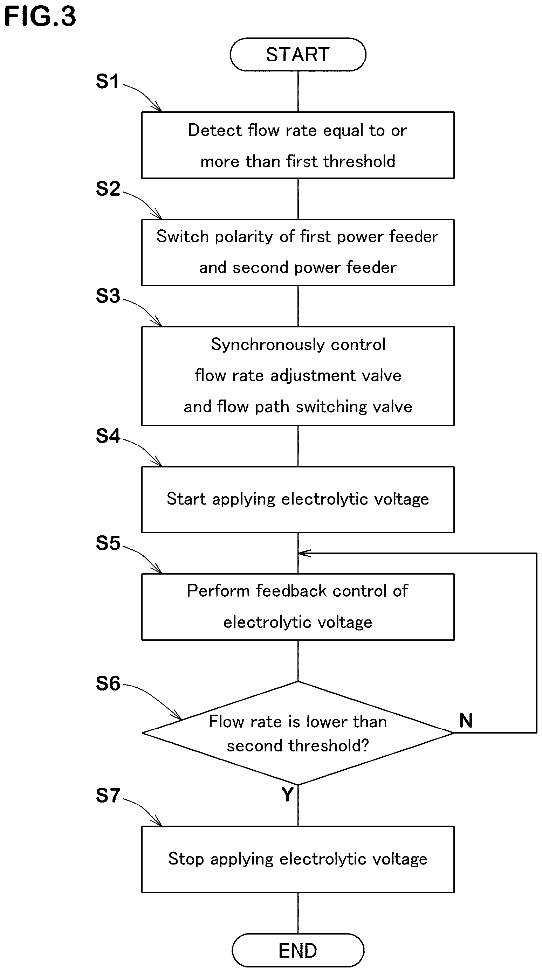

Fig. 3 is a flow chart showing a possible processing procedure of the control unit 5 operating in the colloidal water mode. First, when the flow rate sensor 22 detects a flow rate equal to or more than a predetermined first threshold (step S1), the control unit 5 determines that the faucet with which the water supply pipe 21 is connected has been opened by the user. And the control unit 5 switches the polarity of the first power feeder 41 and the second power feeder 42 (Step S2) and synchronously controls the flow rate adjustment valve 25 and the flow path switching valve 65 (Step S3), and then applies the electrolysis voltage to the first power feeder 41 and the second power feeder 42 to start the electrolysis (Step S4). The processes of the Steps S2 and S3 may be performed simultaneously or in reverse order.

Further, the control unit 5 feedback controls the electrolytic voltage applied to the first power feeder 41 and the second power feeder 42 so that the current detected by the current detection unit 44 becomes the desired value (Step S5), and when the flow rate detected by the flow rate sensor 22 becomes lower than a predetermined second threshold (YES in Step S6), the control unit 5 stops the application of the electrolytic voltage to the first power feeder 41 and the second power feeder 42 (Step S7).

In the above Step S2, the flow rate adjustment valve 25 limits the amount of water supplied to the pole chamber on the anode side. That is, in the electrolytic water production device 1, the flow rate adjustment valve 25 functions as a water amount limiting unit for limiting the amount of water supplied to the pole chamber on the anode side. By limiting the amount of water supplied to the pole chamber on the anode side by the flow rate adjustment valve 25, the concentration of the hydrogen storage metal ions in the electrolytic water in the pole chamber on the anode side is increased in the Steps S4 to S7. Thereby, in the next electrolysis, the electrolytic water containing a large amount of the hydrogen storage metal colloid can be easily produced.

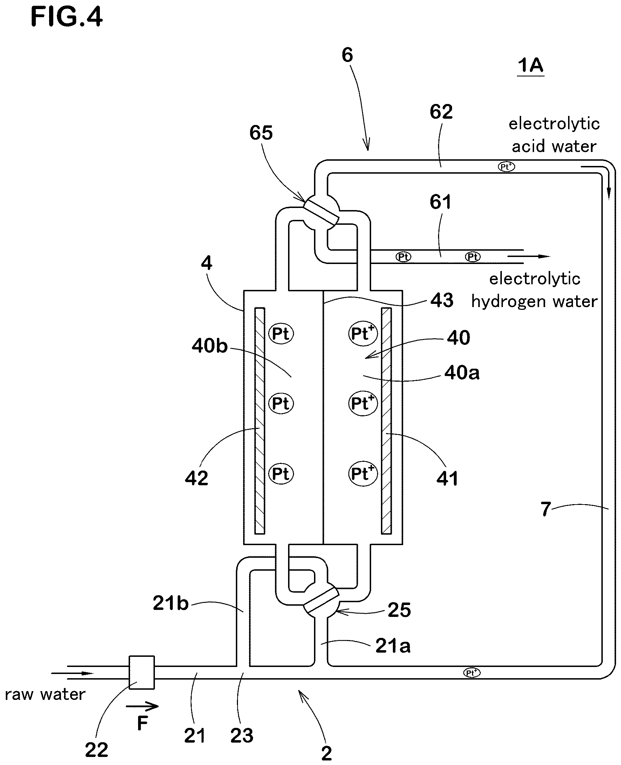

Fig. 4 shows an electrolytic water production device (1A), which is a modification of the electrolytic water production device 1 shown in Fig. 1. The configuration of the above-mentioned electrolytic water production device 1 can be adopted for portions of the electrolytic water production device (1A) which are not described below.

The electrolytic water production device (1A) further includes a return water pipe 7 which connects the water supply pipe (21a) with the pipe functioning as the anode water pipe among the first water outlet pipe 61 and the second water outlet pipe 62 (the second water outlet pipe 62 in Fig. 4). The water flowing out of the pole chamber on the anode side among the first pole chamber (40a) and the second pole chamber (40b) returns to the pole chamber on the anode side via the flow path switching valve 65, the anode water pipe, the return water pipe 7, the water supply pipe (21a), and the flow rate adjustment valve 25. Thereby, the hydrogen storage metal ions produced in the pole chamber on the anode side returns to the pole chamber on the anode side after circulating through the flow path switching valve 65, the anode water pipe, the return water pipe 7, the water supply pipe (21a), and the flow rate adjustment valve 25. Therefore, in the Steps S4 to S7 shown in Fig. 3, the concentration of the hydrogen storage metal ions in the electrolytic water in the pole chamber on the anode side is increased. Thereby, in the next electrolysis, the electrolytic water containing a large amount of the hydrogen storage metal colloid can be easily produced.

while detailed description has been made of the electrolytic water production device 1 according to an embodiment of the present invention, the present invention can be embodied in various forms without being limited to the illustrated embodiment. That is, it suffices as long as the electrolytic water production device 1 is configured such that it at least includes the electrolytic chamber 40 to which water to be electrolyzed is supplied, the first power feeder 41 and the second power feeder 42 arranged to face each other in the electrolytic chamber 40 and having different polarity, the membrane 43 arranged between the first power feeder 41 and the second power feeder 42 so as to divide the electrolytic chamber 40 into the first pole chamber (40a) positioned on a side of the first power feeder 41 and the second pole chamber (40b) positioned on a side of the second power feeder 42, and the control unit 5 for switching the polarity of the first power feeder 41 and the second power feeder 42 between anode and cathode, wherein the surfaces of the first power feeder 41 and the second power feeder 42 are formed of a hydrogen storage metal, and the control unit 5 has the operation mode for switching the polarity each time electrolysis is started in the electrolytic chamber 40.

### Description of the Reference Signs

- 1: : electrolytic water production device
- 1A: : electrolytic water production device
- 5: : control unit (polarity switching unit)
- 7: : return water pipe
- 25: : flow rate adjustment valve (water amount limiting unit)
- 40: : electrolytic chamber
- 40a: : first pole chamber
- 40b: : second pole chamber
- 41: : first power feeder
- 42: : second power feeder
- 43: : membrane
- 65: : flow path switching valve (flow path switching unit)

## Claims

1. An electrolytic water production device (1) comprising
an electrolytic chamber (40) to which water to be electrolyzed is supplied,
a first power feeder (41) and a second power feeder (42) arranged to face each other in the electrolytic chamber (40) and having different polarity,
a membrane (43) arranged between the first power feeder (41) and the second power feeder (42) so as to divide the electrolytic chamber (40) into a first pole chamber (40a) positioned on a side of the first power feeder (41) and a second pole chamber (40b) positioned on a side of the second power feeder (42),
a water inlet portion (2) provided on the upstream side of the electrolytic chamber (40), the water inlet portion (2) comprising
a water supply pipe (21) for supplying water to be electrolyzed to the electrolytic chamber (40),
a branch portion (23) to branch the water supply pipe (21) to two directions of water supply pipes (21a) and (21b),
a flow rate sensor (22) being provided in the water supply pipe (21) to detect the flow rate per unit time periodically of water supplied to the electrolytic chamber (40) and to output a signal corresponding to the detected value to the control unit (5), the flow sensor (22) being provided on the upstream side of the branch portion (23), and
a flow rate adjustment valve (25) to connect the water supply pipes (21a) and (21b) with the first pole chamber (40a) or the second pole chamber (40b),
a control unit (5) for switching the polarity of the first power feeder (41) and the second power feeder (42) between anode and cathode, the control unit (5) including a central processing unit, CPU, a program that controls the operation of the CPU, and a memory, the control unit (5) being connected with the flow rate sensor (22) and the flow rate adjustment valve (25), wherein
surfaces of the first power feeder (41) and the second power feeder (42) are formed of a hydrogen storage metal which is one of platinum, palladium, vanadium, magnesium, zirconium, and alloys containing these as components,
a water outlet portion (6) provided on the downstream side of the electrolytic chamber (40), the water outlet portion (6) comprising
a first water outlet pipe (61) functioning as a cathode water pipe for taking out the electrolytic water produced in the pole chamber on the cathode side of the first pole chamber (40a) and the second pole chamber (40b),
a second water outlet pipe (62) functioning as an anode water pipe for taking out the electrolytic water produced in the pole chamber on the anode side of the first pole chamber (40a) and the second pole chamber (40b), and
a flow path switching valve (65) functioning as a flow path switching unit for switching the connection of the first pole chamber (40a) and the second pole chamber (40b) with the first water outlet pipe (61) and the second water outlet pipe (62), wherein the control unit (5) synchronizes the switching of the polarity of the first power feeder (41) and the second power feeder (42) with the switching of the flow path by the flow path switching valve (65), and wherein the control unit (5) operates the flow rate adjustment valve (25) and the flow path switching valve (65) in conjunction with each other, and the electrolytic water production device (1) further comprising a current detection unit (44) being provided in the current supply line between the first power feeder (41) or the second power feeder (42) and the control unit (5), the current detection unit (44) detecting a direct current supplied to the first power feeder (41) and the second power feeder (42), and outputting an electrical signal corresponding to the detected value to the control unit (5), wherein the control unit (5) controls a DC voltage applied to the first power feeder (41) and the second power feeder (42) based on the electrical signal output from the current detection unit (44),
**characterized in that**
the control unit (5) has two selectable operation modes which are a colloidal water mode for producing electrolytic water containing an amount of hydrogen storage metal colloid after the first time of electrolysis operation has been conducted and an operation mode other than the colloidal water mode,
the control unit (5), in the colloidal water mode, is configured for switching the polarity each time electrolysis is started in the electrolytic chamber (40) and is configured to feedback control the electrolytic voltage applied to the first power feeder (41) and the second power feeder (42) so that the current detected by the current detection unit (44) becomes a desired value according to a desired hydrogen concentration, and
the control unit (5), in the operation mode other than the colloidal water mode, is configured for switching the polarity every predetermined number of times of electrolysis is started in the electrolytic chamber (40) and after the electrolysis is performed a plurality of times in the electrolytic chamber (40).

2. The electrolytic water production device (1) according to claim 1, wherein
the hydrogen storage metal is a metal containing platinum.

3. The electrolytic water production device (1) according to claim 1 or 2, wherein in the colloidal water mode, the control unit (5) is configured to control the flow rate adjustment valve (25) so as to limit an amount of water supplied to the pole chamber on the anode side so that the concentration of the hydrogen storage metal ions in the electrolytic water in the pole chamber on the anode side is increased.

4. The electrolytic water production device (1) according to any one of claims 1 to 3 further comprising
a return water pipe (7) for returning the water flowing out of the first pole chamber (40a) to the first pole chamber (40a).

## Patentansprüche

1. Vorrichtung (1) zur Herstellung von elektrolytischem Wasser, umfassend
eine Elektrolytkammer (40), der zu elektrolysierendes Wasser zugeführt wird,
eine erste Stromzuführung (41) und eine zweite Stromzuführung (42), die so angeordnet sind, dass sie einander in der Elektrolytkammer (40) zugewandt sind, und die eine unterschiedliche Polarität aufweisen,
eine Membran (43), die zwischen der ersten Stromzuführung (41) und der zweiten Stromzuführung (42) angeordnet ist, um die Elektrolytkammer (40) in eine erste Polkammer (40a), die auf einer Seite der ersten Stromzuführung (41) positioniert ist, und eine zweite Polkammer (40b), die auf einer Seite der zweiten Stromzuführung (42) positioniert ist, zu unterteilen,
einen Wassereinlassabschnitt (2), der auf der stromaufwärtigen Seite der Elektrolytkammer (40) vorgesehen ist, wobei der Wassereinlassabschnitt (2) umfasst
ein Wasserzufuhrrohr (21) zum Zuführen von zu elektrolysierendem Wasser zu der Elektrolytkammer (40),
einen Verzweigungsabschnitt (23) zum Verzweigen des Wasserzufuhrrohrs (21) in zwei Richtungen von Wasserzufuhrrohren (21a) und (21b),
einen Durchflussmengensensor (22), der in dem Wasserzufuhrrohr (21) vorgesehen ist, um die Durchflussmenge pro Zeiteinheit von Wasser, das der Elektrolytkammer (40) zugeführt wird, periodisch zu erfassen und ein Signal, das dem erfassten Wert entspricht, an die Steuereinheit (5) auszugeben, wobei der Durchflussmengensensor (22) auf der stromaufwärtigen Seite des Verzweigungsabschnitts (23) vorgesehen ist, und
ein Durchflussmengeneinstellventil (25) zum Verbinden der Wasserzufuhrrohre (21a) und (21b) mit der ersten Polkammer (40a) oder der zweiten Polkammer (40b),
eine Steuereinheit (5) zum Umschalten der Polarität der ersten Stromzuführung (41) und der zweiten Stromzuführung (42) zwischen Anode und Kathode, wobei die Steuereinheit (5) eine zentrale Verarbeitungseinheit, CPU, ein Programm, das den Betrieb der CPU steuert, und einen Speicher umfasst, wobei die Steuereinheit (5) mit dem Durchflussmengensensor (22) und dem Durchflussmengeneinstellventil (25) verbunden ist, wobei
Oberflächen der ersten Stromzuführung (41) und der zweiten Stromzuführung (42) aus einem Wasserstoffspeichermetall gebildet sind, das eines ist von Platin, Palladium, Vanadium, Magnesium, Zirkonium und Legierungen, die diese als Komponenten enthalten,
einen Wasserauslassabschnitt (6), der auf der stromabwärtigen Seite der Elektrolytkammer (40) vorgesehen ist, wobei der Wasserauslassabschnitt (6) umfasst
ein erstes Wasserauslassrohr (61), das als ein Kathodenwasserrohr zum Entnehmen des elektrolytischen Wassers, das in der Polkammer auf der Kathodenseite der ersten Polkammer (40a) und der zweiten Polkammer (40b) erzeugt wird, fungiert,
ein zweites Wasserauslassrohr (62), das als ein Anodenwasserrohr zum Entnehmen des elektrolytischen Wassers, das in der Polkammer auf der Anodenseite der ersten Polkammer (40a) und der zweiten Polkammer (40b) erzeugt wird, fungiert, und
ein Durchflusswegumschaltventil (65), das als eine Durchflusswegumschalteinheit zum Umschalten der Verbindung der ersten Polkammer (40a) und der zweiten Polkammer (40b) fungiert,
wobei die Steuereinheit (5) das Umschalten der Polarität der ersten Stromzuführung (41) und der zweiten Stromzuführung (42) mit dem Umschalten des Durchflusswegs durch das Durchflusswegumschaltventil (65) synchronisiert, und wobei die Steuereinheit (5) das Durchflussmengeneinstellventil (25) und das Durchflusswegumschaltventil (65) in Verbindung miteinander betreibt, und wobei die Vorrichtung (1) zur Herstellung von elektrolytischem Wasser ferner eine Stromerfassungseinheit (44) umfasst, die in der Stromversorgungsleitung zwischen der ersten Stromzuführung (41) oder der zweiten Stromzuführung (42) und der Steuereinheit (5) vorgesehen ist, wobei die Stromerfassungseinheit (44) einen Gleichstrom erfasst, der der ersten Stromzuführung (41) und der zweiten Stromzuführung (42) zugeführt wird, und ein elektrisches Signal, das dem erfassten Wert entspricht, an die Steuereinheit (5) ausgibt, wobei die Steuereinheit (5) eine Gleichspannung, die an die erste Stromzuführung (41) und die zweite Stromzuführung (42) angelegt wird, basierend auf dem elektrischen Signal, das von der Stromerfassungseinheit (44) ausgegeben wird, steuert,
**dadurch gekennzeichnet, dass**
die Steuereinheit (5) zwei auswählbare Betriebsmodi aufweist, die ein Modus kolloidales Wasser zum Herstellen von elektrolytischem Wasser, das eine Menge an Wasserstoffspeichermetallkolloid enthält, nachdem der Elektrolysebetrieb zum ersten Mal durchgeführt wurde, und ein anderer Betriebsmodus als der Modus kolloidales Wasser sind,
die Steuereinheit (5) in dem Modus kolloidales Wasser zum Umschalten der Polarität jedes Mal, wenn die Elektrolyse in der Elektrolytkammer (40) gestartet wird, konfiguriert ist und zum Rückkopplungssteuern der Elektrolytspannung, die an die erste Stromzuführung (41) und die zweite Stromzuführung (42) angelegt wird, konfiguriert ist, so dass der Strom, der durch die Stromerfassungseinheit (44) erfasst wird, einen gewünschten Wert gemäß einer gewünschten Wasserstoffkonzentration annimmt, und
die Steuereinheit (5) in dem anderen Betriebsmodus als dem Modus kolloidales Wasser zum Umschalten der Polarität jede vorbestimmte Anzahl von Malen, wenn die Elektrolyse in der Elektrolytkammer (40) gestartet wird, und nachdem die Elektrolyse mehrere Male in der Elektrolytkammer (40) durchgeführt wird, konfiguriert ist.

2. Vorrichtung (1) zur Herstellung von elektrolytischem Wasser nach Anspruch 1, wobei
das Wasserstoffspeichermetall ein Metall ist, das Platin enthält.

3. Vorrichtung (1) zur Herstellung von elektrolytischem Wasser nach Anspruch 1 oder 2, wobei die Steuereinheit (5) in dem Modus kolloidales Wasser zum Steuern des Durchflussmengeneinstellventils (25) konfiguriert ist, um eine Menge an Wasser, die der Polkammer auf der Anodenseite zugeführt wird, zu begrenzen, so dass die Konzentration der Wasserstoffspeichermetallionen in dem elektrolytischen Wasser in der Polkammer auf der Anodenseite erhöht wird.

4. Vorrichtung (1) zur Herstellung von elektrolytischem Wasser nach einem der Ansprüche 1 bis 3, ferner umfassend
ein Rückführwasserrohr (7) zum Rückführen des Wassers, das aus der ersten Polkammer (40a) herausfließt, zu der ersten Polkammer (40a).

## Revendications

1. Dispositif de production d'eau électrolytique (1) comprenant une chambre électrolytique (40) à laquelle de l'eau à électrolyser est alimentée,
un premier alimentateur de puissance (41) et un second alimentateur de puissance (42) agencés de façon à se faire face dans la chambre électrolytique (40) et ayant une polarité différente,
une membrane (43) agencéd entre le premier alimentateur de puissance (41) et le second alimentateur de puissance (42) de manière à diviser la chambre électrolytique (40) en une première chambre à pôle (40a) positionnée sur un côté du premier alimentateur de puissance (41) et une seconde chambre à pôle (40b) positionnée sur un côté du second alimentateur de puissance (42),
une portion d'entrée d'eau (2) prévue sur le côté amont de la chambre électrolytique (40), la portion d'entrée d'eau (2) comprenant un tube d'alimentation d'eau (21) pour alimenter de l'eau à électrolyser à la chambre électrolytique (40),
une portion de ramification (23) pour ramifier le tube d'alimentation d'eau (21) en deux directions de tubes d'alimentation d'eau (21a) et (21b),
un capteur de débit (22) qui est prévu dans le tube d'alimentation d'eau (21) pour détecter le débit par temps unitaire périodiquement de l'eau à alimenter à la chambre électrolytique (40) et pour sortir un signal correspondant à la valeur détectée vers l'unité de commande (5), le capteur de débit (22) étant prévu sur le côté amont de la portion de ramification (23), et
une vanne d'ajustement de débit (25) pour connecter les tubes d'alimentation d'eau (21a) et (21b) à la première chambre à pôle (40a) ou à la seconde chambre à pôle (40b),
une unité de commande (5) destinée à commuter la polarité du premier alimentateur de puissance (41) et du second alimentateur de puissance (42) entre une anode et une cathode, l'unité de commande (5) incluant une unité centrale de traitement (CPU, central processing unit), un programme qui commande le fonctionnement de la CPU, et une mémoire, l'unité de commande (5) étant connectée au capteur de débit (22) et à la vanne d'ajustement de débit (25), dans lequel
des surfaces du premier alimentateur de puissance (41) et du second alimentateur de puissance (42) sont formées d'un métal de stockage d'hydrogène qui est un métal parmi : platine, palladium, vanadium, magnésium, zirconium, et des alliages contenant ceux-ci en tant que composants,
une portion de sortie d'eau (6) prévue sur le côté aval de la chambre électrolytique (40), la portion de sortie d'eau (6) comprenant
un premier tube de sortie d'eau (61) fonctionnant en tant que tube d'eau de cathode pour faire sortir l'eau électrolytique produite dans la chambre à pôle sur le côté cathode de la première chambre à pôle (40a) et de la seconde chambre à pôle (40b),
un second tube de sortie d'eau (62) fonctionnant en tant que tube à eau d'anode pour faire sortir l'eau électrolytique produite dans la chambre à pôle sur le côté anode de la première chambre à pôle (40a) et de la seconde chambre à pôle (40b), et
une vanne de commutation de trajet d'écoulement (65) fonctionnant en tant qu'unité de commutation de trajet d'écoulement destinée à commuter la connexion de la première chambre à pôle (40a) et de la seconde chambre à pôle (40b) avec le premier tube de sortie d'eau (61) et le second tube de sortie d'eau (62), dans lequel l'unité de commande (5) synchronise la commutation de la polarité du premier alimentateur de puissance (41) et du second alimentateur de puissance (42) avec la commutation du trajet d'écoulement via la vanne de commutation de trajet d'écoulement (65), et dans lequel l'unité de commande (5) actionne la vanne d'ajustement de débit (25) et la vanne de commutation de trajet d'écoulement (65) conjointement l'une avec l'autre, et
le dispositif de production d'eau électrolytique (1) comprend en outre une unité de détection de courant (44) qui est prévue dans la ligne d'alimentation de courant entre le premier alimentateur de puissance (41) ou le second alimentateur de puissance (42) et l'unité de commande (5), l'unité de détection de courant (44) détectant un courant continu alimenté au premier alimentateur de puissance (41) et au second alimentateur de puissance (42), et sortant un signal électrique correspondant à la valeur détectée vers l'unité de commande (5), dans lequel l'unité de commande (5) commande une tension CC appliquée au premier alimentateur de puissance (41) et au second alimentateur de puissance (42) sur la base du signal électrique sorti depuis l'unité de détection de courant (44),
**caractérisé en ce que**
l'unité de commande (5) a deux modes de fonctionnement sélectionnables qui sont un mode d'eau colloïdale pour produire de l'eau électrolytique contenant une quantité de colloïde de métal de stockage d'hydrogène la première fois où une opération d'électrolyse a été réalisée, et un mode de fonctionnement autre que le mode d'eau colloïdale,
l'unité de commande (5), dans le mode d'eau colloïdale, est configurée pour commuter la pluralité chaque fois qu'une électrolyse est démarrée dans la chambre électrolytique (40) et est configurée pour commander une rétroaction de la tension électrolytique appliquée au premier alimentateur de puissance (41) et au second alimentateur de puissance (42) de telle sorte que le courant détecté par l'unité de détection de courant (44) devient une valeur désirée en accord avec une concentration d'hydrogène désirée, et
l'unité de commande (5), dans le mode de fonctionnement autre que le mode d'eau colloïdale, est configurée pour commuter la polarité à chaque nombre déterminé de fois où une électrolyse est démarrée dans la chambre électrolytique (40) et après que l'électrolyse a été effectuée une pluralité de fois dans la chambre électrolytique (40).

2. Dispositif de production d'eau électrolytique (1) selon la revendication 1, dans lequel
le métal de stockage d'hydrogène est un métal contenant du platine.

3. Dispositif de production d'eau électrolytique (1) selon la revendication 1 ou 2, dans lequel, dans le mode d'eau colloïdale, l'unité de commande (5) est configurée pour commander la vanne d'ajustement de débit (25) de manière à limiter une quantité d'eau alimentée à la chambre à pôle sur le côté anode de telle sorte que la concentration des ions de métal de stockage d'hydrogène dans l'eau électrolytique dans la chambre à pôle sur le côté anode est augmentée.

4. Dispositif de production d'eau électrolytique (1) selon l'une quelconque des revendications 1 à 3, comprenant en outre un tube d'eau de retour (7) destiné à renvoyer l'eau s'écoulant hors de la première chambre à pôle (40a) vers la première chambre à pôle (40a).
